(19) Europäisches Patentamt
European Patent Office
Office européen des brevets

(11) **EP 1 443 580 A1**

(12) **EUROPEAN PATENT APPLICATION**

(43) Date of publication:
04.08.2004 Bulletin 2004/32

(51) Int Cl.[7]: **H01M 8/04**, H01M 8/02, H01M 8/06, H02K 1/06, H02K 1/27, B60K 1/02, H02P 5/00

(21) Application number: 03250456.5

(22) Date of filing: 24.01.2003

(84) Designated Contracting States:
**AT BE BG CH CY CZ DE DK EE ES FI FR GB GR HU IE IT LI LU MC NL PT SE SI SK TR**
Designated Extension States:
**AL LT LV MK RO**

(71) Applicants:
• **Fullerene Co., Ltd.**
**Tokyo (JP)**
• **Gobal-SSB Research Laboratories (USA) Inc.**
**New York, New York 10021-2209 (US)**

(72) Inventors:
• **Kawamura, Naotake**
**Suginami-ku, Tokyo 168-0071 (JP)**
• **Mori, Yukinobu**
**Mayfair, London W1J 9TB (GB)**

(74) Representative: **Tollett, Ian et al**
**Williams Powell,**
**Morley House,**
**26-30 Holborn Viaduct**
**London EC1A 2BP (GB)**

(54) **A fuel cell system**

(57) The system comprises a solid high polymer fuel cell to which hydrogen gas generated by a hydrogen generator 11 by electrolyzing the demineralized water is provided. A cell stack 30 includes a flowmeter 14, a hot air nozzle 15, a spray nozzle 16, a water sensor 17, temperature sensors 18, gas concentration sensors 19, a water tank 21, a pump 20, a hydrogen supply pipe 23, an oxygen supply pipe 24, a pair of take-off electrodes 25, and an amplifier 26 so that the operation of load 27 can be optimized by a power controller 10 based on signals from each sensor.

FIG. 1

## Description

The present invention relates to a solid high polymer fuel cell. In particular, it relates to a cell to be mounted on a vehicle having a hydrogen generator in which hydrogen gas generated by the electrolysis of the demineralized water is integrated with a cell stack to which hydrogen obtained by the generator is supplied.

A conventional solid high polymer fuel cell comprises a prescribed number of layers of a dynamic cell, including a membrane electrode junction body in which an electrolyte membrane comprising high polymer ion exchange membrane (cation exchange membrane) is placed between a negative electrode and a positive electrode and a separator which is arranged on the junction body so that the solid high polymer fuel cell is used as a fuel cell stack.

In this type of conventional fuel cell, the fuel gas provided to the electrode on the oxygen side, for example, the gas that mainly contains hydrogen (hydrogen content gas), is utilized as direct current electrical energy. That is, the hydrogen is ionized on the catalytic electrode, then migrates to the electrode on the hydrogen side through electrolytes so that the electrons generated during the process are collected in an external circuit to be utilized as DC electrical energy. As the oxidizer gas, for example, a gas that mainly contains oxygen or air so called oxygen content gas, is provided to the hydrogen electrode, the hydrogen ion, electron, and oxygen react to generate water at the hydrogen electrode.

In such a conventional fuel cell, an optimum operating temperature has been set for effective power generating performance, and various cooling mechanism are employed to maintain a dynamic cell at the operating temperature. In general, a separator which constitutes a fuel cell stack is provided with a path for a cooling medium to supply coolant such as water so as to cool a dynamic cell.

In the above case, the water used as cooling medium or a coolant used for cooling a vehicle engine contains impurities such as ion or metal additives so that the coolant per se has conductivity. When deionized water or demineralized water is used, such water circulates through cooling system piping or a radiator during operation so that metal or the like is mingled, which allows the coolant to be conductive. In such a fuel cell, electrons generated at each dynamic cell are derived from collecting electrodes at both ends of the stack. Thus, if conductivity is applied to a cooling medium as described above, the cooling system piping or radiator carries electricity through the cooling medium, which generates earth fault or liquid junction to reduce the overall power of the fuel cell.

The outline of a fuel cell is usually placed in a lateral position. When placed in a lateral direction, the gas supply port and gas exhaust port are both located at the separator. Due to the following reason, the outlet for gas not-yet-reacted with oxygen is particularly located at the bottom of the fuel cell:

The hydrogen reaction gas supplied to the fuel cell reacts with the reaction gas across an ion exchange membrane so as to separate into hydrogen ions and electrons on a liquid catalyst. The hydrogen ion integrated with the water migrates in the ion exchange membrane while the electron travels through an external circuit (at this point, electric current flows) so that the hydrogen ion, oxygen, and the electron react together on an oxygen pole catalyst to generate water. The water generated by this electromotive reaction is mainly processed as follows: The water pooled in an oxygen catalytic layer or oxygen pole diffused layer and in a separator of oxygen pole moves toward a lower place through a gas channel to be collected. Then, due to the law of gravity, the water escapes outward from an outlet for gas not-yet-reacted with oxygen that is placed at a lower part. Such effluent water is pooled in a cooling water manifold mounted on the device so as to be reused as cooling water.

In an on-vehicle fuel cell powered vehicle, because equipment used in the motor or engine compartment is multipurpose, the layout space for such equipment is often limited. Criteria for use of such electrical products are, for example, not more than 600 V, which is the same voltage as an engine driven automobile. As the main drive motor is alternating current, it is necessary to incorporate electronic equipment so that the power of the fuel cell can be converted from DC to AC to supply stable current. Since some of such electronic equipment generates heat, it necessitates cooling.

A power control unit is sealed with waterproof construction. Because most electronic equipment used in the motor or engine compartment is sensitive to the increase of temperature, it is necessary to introduce cold air into the unit. It is required to maintain the working temperature of a switching element in a switching circuit not higher than 150° and that of a reactor of a ballast not higher than 100°.

As an example of electronic equipment mounted in a vehicle, a compressor with 3000 liters/ minute (standard) has been used. The cooling capacity of an intercooler is 3000 L/ Min. (STD.) which can cool the temperature between 150° and 80°. The cooling water at 70° has been used with the flow of 100 L/ Min. A muffler is used at 115 Hz, 210 Hz, 485 Hz, 660 Hz, and 935 Hz. The maximum flow of the coolant running in a heat sink is 16 L/ Min. A switching element of heat generating electronic equipment with the maximum heating value of 1650 W and a reactor with the maximum dissipation of 55.9 W are used, respectively. Since the fuel cell itself also generates heat, it requires the supply of coolant and temperature control. The power control unit regulates and controls the flow rate of the hydrogen gas and oxygen gas and the whole main driving motor.

An object of the present invention is to provide a solid high polymer fuel cell that maintains effective power generating capacity in which leakage through the cooling medium can be reliably prevented.

To achieve the aforementioned object, a solid high polymer fuel cell system of the present invention includes a solid high polymer fuel cell to which hydrogen gas generated by a hydrogen generator 11 by electrolyzing the demineralized water is provided, comprising:

a cell stack formed by a pair of separators for holding both surfaces of two membrane electrode joining bodies in which an ion exchange membrane is arranged between a hydrogen electrode and an oxygen electrode wherein each separator includes an upstream opening for hydrogen gas, oxidizer gas and cooling water on one end and a downstream opening on the ether end wherein the separator abutting the oxygen side electrode has a groove composed of a number of channels connecting the upstream opening and the downstream opening for hydrogen gas; the separator abutting the hydrogen side electrode has a groove composed of a number of channels connecting the upstream opening and the downstream opening for oxidizer gas, and the separator for cooling has a groove composed of a number of channels connecting the upstream opening and the downstream opening for cooling water; a flow sensor and a temperature sensor for hydrogen and oxygen, and a flow sensor for coolant within the cell stack;
a power control unit for controlling operation on the basis of detected signals by said sensors so that the power derived from the take-off electrode is supplied to a load through an amplifier.

The separators within the cell stack comprise a separator abutting the oxygen side electrode and a separator abutting the hydrogen side electrode wherein the oxygen side separator includes a drain valve.

The amplifier directly connects a DC generator with an input motor whose power supply powers the cell stack; a permanent magnet M2 is provided at the periphery of a magnet M1 in such a manner that it becomes homopolar relating to N pole and S pole arranged at the circumference of a rotor of the DC generator while it becomes heteropolar between adjacency so as to amplify the revolution speed of the rotor of the DC generator; an output axis of the DC generator is connected with an output generator so that a direct voltage source having higher rotational output can be derived since thus obtained output is amplified by the output generator more than on the input side.

A number of preferred embodiments of the present invention will now be described with reference to the drawings, in which:-

Fig. 1 is a block diagram illustrating a fuel cell system of the present invention;
Fig. 2 is a front view illustrating a separator for cooling water;
Fig. 3 is a front view illustrating a separator on the oxygen pole side;
Fig. 4 is a front view illustrating a separator on the hydrogen pole side; and
Fig. 5 is a sectional view illustrating an example of an amplifier of the present invention.

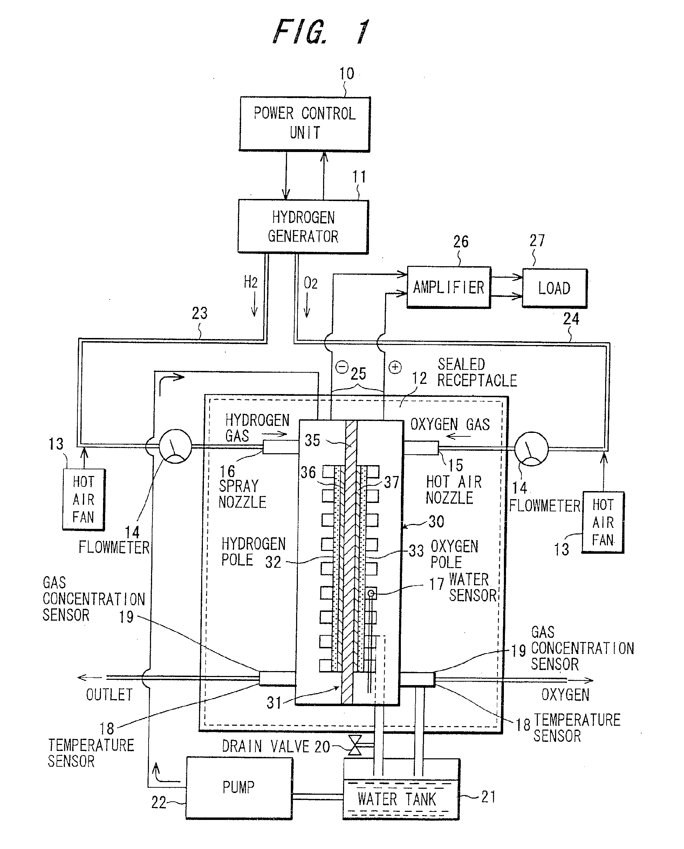

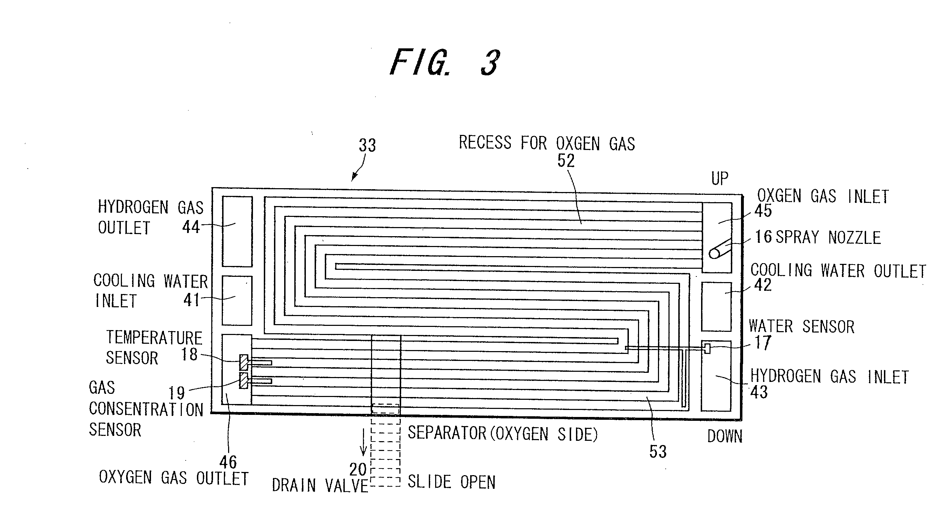

Fig. 1 is a block diagram illustrating the total construction of a fuel cell system of the present invention. A hydrogen supply pipe 23 and an oxygen supply pipe 24 of a hydrogen generator 11 which generates hydrogen by electrolyzing the demineralized water are connected to a hydrogen pole separator and an oxygen pole separator 24 of a cell stack 30, respectively. The cell stack 30 placed within a sealed receptacle 12 is formed by laminating catalytic layers 36, 37, hydrogen pole, oxygen pole, and separators 32, 33 in such a manner that an ion exchange membrane (electrolyte layer) 35 is placed therebetween in which supply pipes for each gas are provided in an end plate in which a spray nozzle 16 is inserted into the hydrogen gas supply pipe, and a hot air nozzle 15 inserted into the oxygen gas supply pipe. As explained below, in Fig. 3, the separator for cooling water can be omitted by providing a drain valve 20 on the oxygen side separator 33.

In Fig. 1, reference numeral 13 represents a hot air fan, 14 represents a flowmeter; 15 represents a hot air nozzle; 16 represents a spray nozzle; 17 represents a water sensor; 18 represents a temperature sensor; and 19 represents a gas concentration sensor, respectively. These sensors are connected to a power control unit 10 in which flow control functions of hydrogen gas, oxygen gas, and cooling water have been preset.

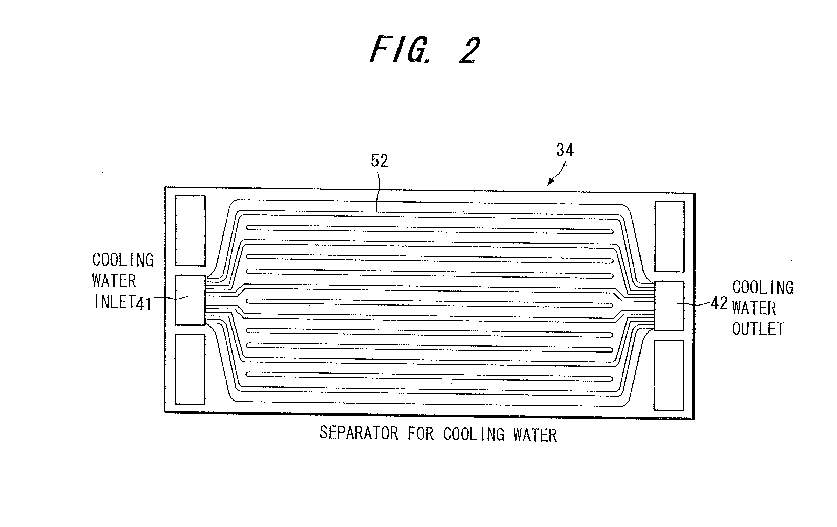

Fig. 2 is a front view of a separator for cooling water 34. A rectangular plate face includes a cooling water inlet 41 on one end and a cooling water outlet 42 on the other end in which a number of channels 52 are formed therebetween to connect the inlet and the outlet.

Fig. 3 is a front view of a separator on the oxygen pole side. Similar to the separator 34, a rectangular plate face includes a cooling water inlet 41 on one end and a cooling water outlet 42 on the other end in which a number of channels 52 are formed therebetween to connect the inlet and the outlet. A hydrogen gas outlet 44 and an oxygen gas outlet 46 are provided above and below the cooling water inlet 41 while an oxygen gas inlet 45 and a hydrogen gas inlet 43 are provided above and below the cooling water outlet 42, respectively. A drain valve 20 which opens and closes freely is mounted over a section of the channels 53. Further, a temperature sensor 18 and a gas concentration sensor 19 are inserted into the oxygen gas outlet 46 side. A spray nozzle 16 is located in the oxygen gas inlet 45 and a water sensor 17 is located in the hydrogen gas inlet 43.

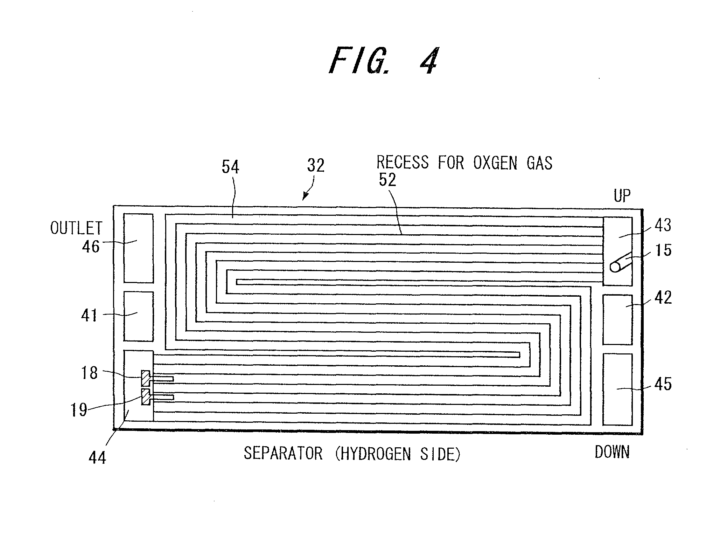

Fig. 4 is a front view of a separator on the hydrogen side._Similar to the construction of the aforementioned separators, a rectangular plate face includes a cooling water inlet 41 on one end and a cooling water outlet 42 on the other end in which a number of channels 54 are formed therebetween to connect the inlet and the outlet. An oxygen gas outlet 46 and a hydrogen gas outlet 44 are provided above and below the cooling water inlet 41 while a hydrogen gas inlet 43 and an oxygen gas inlet 45 are provided above and below the cooling water outlet 42, respectively. Further, a temperature sensor 18 and a gas concentration sensor 19 are inserted into the hydrogen gas outlet 44 side of the grooves 54. A hot air nozzle 15 is inserted into the hydrogen gas inlet 43.

According to the present invention, flow control functions of hydrogen gas, oxygen gas, and cooling water have been set in advance to a power control unit 10 mounted on a vehicle to control the capacity of each function.

The hydrogen gas generated by a hydrogen generator is controlled by a particularly designed blower so that the gas is supplied to the groove of a separator on the oxygen pole side under the application of humidity. Thus obtained hydrogen gas travels in a hydrogen channel, passes through a porous diffusion electrode layer (hydrogen collecting layer) 23, and becomes hydrogen reaction gas at a catalytic electrode layer on the hydrogen pole side. The flow rate of the hydrogen gas is controlled. On the other hand, in a similar manner, the oxygen gas generated by the hydrogen generator is controlled by a particularly designed blower so that the gas is supplied to the groove of a separator on the hydrogen pole side which opposes the oxygen pole side separator across an ion exchange membrane under the application of humidity and pressure by a compressor. Accordingly, the flow rate of the oxygen gas can also be regulated.

Thus obtained oxygen gas travels in an oxygen channel of the separator, passes through a porous diffusion electrode layer 24, and becomes oxygen reaction gas at a catalytic electrode layer of the oxygen pole side. Then, the hydrogen gas and oxygen gas react on the catalyst of the hydrogen pole so as to divide into hydrogen ions and negative electrons, which are the source of the electricity. At the same time, the cooling water is supplied from a cooling water supply groove of the separator on the oxygen pole side, with the quantity of water regulated. The supply volume of the cooling water can be also regulated. The humidity is applied to the electrode layer on the oxygen pole side and the catalytic electrode layer, with the oxygen pole side cooled. The outcome of the hydrogen gas reaction can be acquired by visually confirming the generated energy of the cell stack 30.

The water is generated due to the reaction of hydrogen gas and oxygen gas on the hydrogen pole side opposing the oxygen pole side across the ion exchange membrane. Although most of the water generated here is absorbed later because of the evaporative latent heat, a manifold is required for regulating the water temporarily. Such water is utilized for supplying cooling water. With efficient regulation of the hydrogen gas and oxygen gas generated by the hydrogen generator, the supply of the hydrogen gas on the oxygen pole side is controlled and the generated energy of the cell stack can be viewed so as to confirm the reaction status of the hydrogen gas.

Moreover, the supply volume of oxygen gas on the hydrogen pole side opposing across the ion exchange membrane can be controlled, confirming the reaction status of the oxygen gas as well as the whole status of the generated energy. The fuel cell system to be mounted on a vehicle according to the invention, therefore, comprises the integration of a hydrogen generator that is easy to operate and a solid high polymer electrolyte fuel cell.

Further, each regulating part necessary for operation can be easily controlled, and it is also easy to perform the starting procedure.

In the fuel cell, a hot air generator with a nozzle bore of 3 mm (ordinary temperature - 300°; capacity 1.48 $m^3$ / Min.) is provided to an oxygen reaction gas supply port. With this structure, the hydrogen reaction gas reacts with the oxygen reaction gas across the ion exchange membrane so as to be divided into hydrogen ions and electrons on the hydrogen pole catalyst. During this electromotive reaction, the water generated on the oxygen pole catalyst is removed in accordance with the following procedures: The nozzle of the hot air generator arranged at the oxygen reaction gas supply port blows the heated air of approximately 200° into the oxygen reaction gas supply port. Consequently, the whole of the oxygen pole separator becomes dry. Thus, the internal resistance within the cell can be also suppressed so that a sufficient power generating environment of the cell as a whole can be obtained.

A hot air generator with nozzle bore of 3 mm (ordinary temperature - 300°; capacity 1.48 $m^3$ / Min.) is provided to a hydrogen reaction gas supply port. Further, a spray nozzle having a bore size of 3 mm is also arranged on the hydrogen reaction gas supply port. With this structure, the hydrogen reaction gas is supplied from the port, and the demineralized water provided in the arranged spray is supplied from the supply port sequentially as the necessity arises. The nozzle of the hot air generator arranged at the hydrogen reaction gas supply port blows the heated air of approximately 200° into the hydrogen reaction gas supply port, which allows the reaction of the hydrogen gas to increase. Due to the appropriate humidity and heating, a sufficient power generating environment is maintained at both the catalyst electrode layer and the diffusion electrode layer. It also solves some problems of a fuel cell, that is, the internal resistance on the hydrogen pole side is higher around the supply port (the inlet), while the internal resistance on the oxygen pole side is higher around the exhaust port (the outlet). In addition, the aridity on the oxygen pole side and the humidity on the hydrogen pole side can be regulated, which enables the control of the cell stack easily as a whole so that a sufficient power generating condition can be maintained.

A fuel cell becomes a heating element of approximately 80° once it operates. However, before the operation, the fuel cell is so cold that it requires preparation for optimum starting operation. While the hydrogen reaction gas supplied from the integrated hydrogen generator is provided to the fuel supply port, an equipped spray nozzle blows the hot air to apply humidity (the heat of the hot air in inverse proportion to the temperature: If the temperature is 0°, the hot air is 80°).

While the oxygen reaction gas is supplied to an oxygen gas supply port across an ion exchange membrane, an equipped hot air nozzle blows the hot air (the heat of the hot air is in inverse proportion to the temperature: If the temperature is 0°, the hot air is 80°). Accordingly, the hydrogen reaction gas and oxygen reaction gas that have been supplied to the fuel cell at the start of operation reach hot air operation status so that both reaction gases interact with each other to be divided into hydrogen ions and electrons in the hydrogen pole catalyst. The hydrogen ions move in the ion exchange membrane along with water so that the hydrogen ions, oxygen, and electrons react in the oxygen pole catalyst to generate water. At this time, the electrons pass through the external circuit to generate electric current. Therefore, once the fuel cell commences operating, the integrated hydrogen generator and the fuel cell are automatically regulated by a power control unit 10 which regulate the whole.

Namely, the hot air nozzle on the oxygen pole side and the spray nozzle on the hydrogen pole side can regulate the volume as well as the temperature between 5° and 300°. Thus, it can be used as a coolant fan in tropical climates.

In a fuel cell, the following steps are performed to maintain a secure power generating state: mounting a gas concentration sensor on the exhaust port for the gas not-yet-reacted with hydrogen to check the concentration of the exhausted gas; and mounting a gas temperature sensor to check the temperature of the exhausted gas. Checking the concentration and the temperature of the exhausted gas not-yet-reacted with hydrogen makes it possible to verify the power generating condition of the fuel cell at present as well as to measure the volume of the supplied hydrogen reaction gas. In addition, it also allows regulation of the quantity, humidity and temperature of the supplied hot air. In a similar fashion, mounting a gas concentration sensor on the exhaust port for the gas not-yet-reacted with oxygen across an ion exchange membrane allows operators to check the concentration of the exhausted gas; and mounting a gas temperature sensor allows operators to check the temperature of the exhausted gas.

The capacity to check the concentration and the temperature of the exhausted gas not-yet-reacted with oxygen makes it possible to verify the power generating condition of the fuel cell at present as well as to regulate the volume of the oxygen react gas that is already supplied. In addition, it also allows regulation of the quantity and temperature of the supplied hot air.

In order to regulate the quantity and temperature of the hot air, the operation of the integrated hydrogen generator and the power control unit of the fuel cell are regulated automatically or manually following below processes 1 to 5 below:

1. To start the hydrogen generator and to start the fuel cell;
2. To display the quantity, temperature, and humidity of the hydrogen gas and the oxygen gas;
3. To display the supplied pressure to the hydrogen gas and the oxygen gas;
4. To display the supply of the humidity and the humidity itself at the supply port on the hydrogen pole side as the fuel cell starts; and to display the gas concentration and temperature of the exhaust port of the hydrogen gas;
5. To dry the oxygen pole catalytic layer and collecting layer by blowing hot air into the supply port on the oxygen pole side as the fuel cell starts; and to display the gas concentration and temperature of the exhaust port of the oxygen gas.

In the fuel cell of the present invention, a separator for cooling water is provided between collecting electrodes. Cooling medium supplied to this separator is electrically isolated from power generating cells and the said collecting electrodes through isolating means while electrical connection is established between the said power generating cells, or the power generating cell and the collecting electrode, through conductive means. Thus, not only can the occurrence of the earth fault or liquid junction due to cooling medium be reliably prevented, but also the whole fuel cell stack can efficiently inhibit power reduction, which allows the power generating function to be maintained optimally.

It is, in general, necessary for a separator to be cooled with cooling water so as to effuse the heat generated by a cell stack at the time of power generation. However, as shown in Fig. 3, a drain valve 20 is provided at the bottom of the separator on the oxygen side to discharge water outward to cool the separator so that the panel for cooling water can be omitted.

When humidity and hydrogen reaction gas are supplied to the catalytic layer of the hydrogen side and the collecting layer, the temperature, humidity and flow rate are controlled through detection by sensors. In the meantime, the temperature and flow rate of oxygen reaction gas to the catalytic layer of the oxygen side and the collecting layer between which an ion membrane is located are modulated and controlled through detection by a temperature sensor 18 and gas concentration sensor 19. Further, generated water is processed by dry hot air of 0 to 5 % humidity according to instructions by the water sensor 17. When generated water exceeds any predetermined level, a drain valve 20 provided at the bottom of the oxygen side separator opens to discharge excess water.

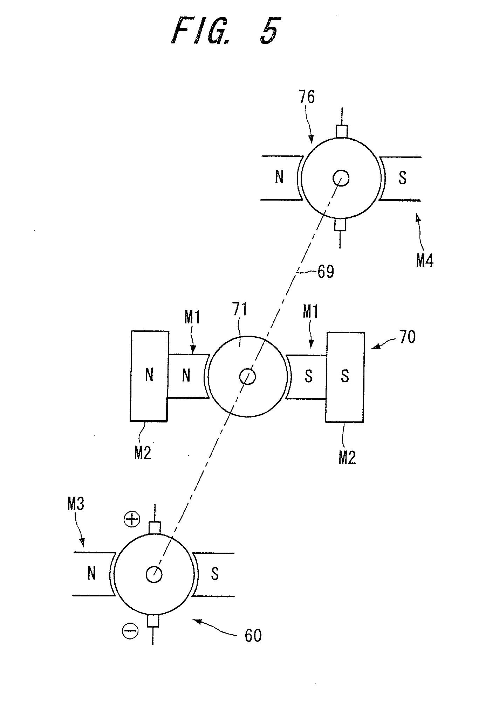

Fig. 5 illustrates an example of an amplifier of the present invention. According to this amplifier, the rotation force derived from the output side has been amplified greater than that of the input side, which can be also used as a compact high output power source deriving apparatus with a permanent magnet.

As shown in Fig. 5, an input motor 60 whose power source is DC power from the cell stack 30 is directly connected to a DC generator 70. A permanent magnet M2 is provided at the periphery of a magnet M1 in such a manner that it becomes homopolar relating to N and S poles of a magnet M1 arranged at the circumference of a rotor 71 of the DC generator 70 while it becomes heteropolar between adjacency so as to amplify the revolution speed of the rotor 71 of the DC generator 70. An output axis 69 of the DC generator 70 is connected with an output generator 76 so that an AC or DC power source having high rotational output is derived from the output generator, which is amplified greater than on the input side.

In Fig. 5, an input motor 60 is activated by supplying ac or dc electric power, and a rotor 71 of a DC generator 70 connected to the input motor 60 is rotated. A permanent magnet M2 is provided at the periphery of a magnet M1 in such a manner that it becomes homopolar relating to N and S poles of the magnet M1 arranged at the circumference of a rotor 71 while it becomes heteropolar between adjacency so that the magnetic force on the rotor side is amplified, which makes the rotation of the rotor greater. In order to make the rotation faster, high rotation thus obtained is transferred to an output generator 76 so that a power source having high rotational output is derived, which is amplified greater than on the input side.

As a DC motor 60 is activated, a rotor of a DC generator 70 being connected to the DC motor 60 rotates at high speed, which subsequently increases the rotation rate of a rotor of an output generator 76 connected to the DC generator. Thus, is derived a power source having greater output from the output generator 76 than from the input side. In addition, the structure is so compact and simplified that it is convenient to use. If AC power is required in an automobile, it will be D/A converted before use.

As shown in Fig. 5, in the high output power source take-off device, an input motor 60 composed of an AC motor or a DC motor whose power supply is either AC or DC is directly connected to a DC generator 70 in which N pole and S pole of a permanent magnet M2 are provided at the periphery of a magnet M1 in such a manner that it becomes homopolar relating to N pole and S pole of a magnet M1 arranged at the circumference of a rotor of the DC generator 70 while it becomes heteropolar between adjacency so as to amplify the revolution speed of the rotor of the DC generator 70.

The electricity generated at the DC generator 70 increases in proportion to the rotational speed of the rotor while the voltage also increases proportionally. Therefore, when V is the voltage generated by the generator; k is the constant determined by the construction of the generator; N is the number of rotation of the rotor of the generator; and $\varnothing$ is magnetic flux, then the following formula is given:

$$V=k \cdot N \cdot \varnothing$$

From the above formula,

$$\varnothing=V/k \cdot N$$

is given, that is, when magnetic flux $\varnothing$ increases not only voltage V but also the rate of rotation N increases.

As described above, according to the fuel cell system of the invention, the cooling medium for cooling power generating cells is electrically insulated from the power generating cells and collecting electrodes, which allows optimal power generating function to be securely maintained. Moreover, electrical connection between power generating cells or between the power generating cell and a collecting electrode, in which a separator for cooling water is placed in-between, is established so that optimal power generating function of the whole fuel cell stack can be maintained.

In addition, as claimed in claim 3, the output of the cell stack is connected to a load through an amplifier so that high rotational output amplified greater than that of the input can be taken off.

**Claims**

1. A solid high polymer fuel cell to which hydrogen gas generated by a hydrogen generator 11 by electrolyzing the demineralized water is provided, comprising:

   a cell stack 30 formed so as to be placed between a pair of separators 32, 33 for holding both surfaces of two membrane electrode joining bodies in which an ion exchange membrane 35 is arranged between a hydrogen electrode and an oxygen electrode wherein each separator includes an upstream opening for hydrogen gas, oxidizer gas and cooling water on one end and a downstream opening on the other end wherein the separator 33 abutting the oxygen side electrode has a groove composed of a number of channels 52 connecting the upstream opening 43 and the downstream opening 44 for hydrogen gas, the separator 32 abutting the hydrogen side electrode has a groove composed of a number of channels 52 connecting the upstream opening 45 and the downstream opening 46 for oxidizer gas, and the separator 34 for cooling has a groove composed of a number of channels 52 connecting the upstream opening 41 and the downstream opening 42 for cooling water;
a flow sensor 14 and a temperature sensor 18 for hydrogen and oxygen, and a flow sensor for coolant within the cell stack; and
a power control unit 10 for controlling operation on the basis of detected signals by said sensors so that the power derived from the take-off electrode is supplied to a load through an amplifier.

2.   A fuel cell according to claim 1 wherein the separators within the cell stack comprise a separator abutting the oxygen side electrode and a separator abutting the hydrogen side electrode in which the oxygen side separator includes a drain valve 20.

3.   A fuel cell according to claim 1 or 2, wherein the amplifier directly connects a DC generator 70 with an input motor 60 whose power supply is DC power from the cell stack; a permanent magnet M2 is provided at the periphery of a magnet M1 in such a manner that it becomes homopolar relating to N pole and S pole arranged at the circumference of a rotor of the DC generator while it becomes heteropolar between adjacency so as to amplify the revolution speed of the rotor of the DC generator; an output axis of the DC generator is connected with an output generator so that a direct voltage source with high rotational output is derived from the output generator, and is amplified greater than that being amplified on the input side.

# FIG. 1

# FIG. 2

COOLING WATER INLET 41

COOLING WATER OUTLET 42

52

34

SEPARATOR FOR COOLING WATER

EP 1 443 580 A1

# FIG. 3

RECESS FOR OXGEN GAS
52

33

UP

HYDROGEN GAS OUTLET  44

OXGEN GAS INLET 45

16 SPRAY NOZZLE

COOLING WATER INLET  41

COOLING WATER OUTLET 42

TEMPERATURE SENSOR  18

WATER SENSOR 17

GAS CONSENTRATION SENSOR  19

HYDROGEN GAS INLET 43

46
OXYGEN GAS OUTLET

SEPARATOR(OXYGEN SIDE)

53

DOWN

20
DRAIN VALVE  SLIDE OPEN

EP 1 443 580 A1

# FIG. 4

RECESS FOR OXGEN GAS
52

54    32    UP

OUTLET
46    43
      15

41    42

18    45
19

44    SEPARATOR (HYDROGEN SIDE)    DOWN

EP 1 443 580 A1

# FIG. 5

**European Patent Office**

**EUROPEAN SEARCH REPORT**

Application Number

EP 03 25 0456

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | WO 00/63994 A (INT FUEL CELLS LLC) 26 October 2000 (2000-10-26) * page 6, line 1-23 * * page 7, line 8-17 * * page 7, line 28 - page 8, line 21 * * figure 2 * * page 9, line 27-31 * * page 11, line 6-25 * * page 12, line 1-8 * * page 13, line 6-11 * --- | 1-3 | H01M8/04 H01M8/02 H01M8/06 H02K1/06 H02K1/27 B60K1/02 H02P5/00 |
| Y | US 6 326 763 B1 (SINHA GAUTAM ET AL) 4 December 2001 (2001-12-04) * column 3, line 2 - column 4, line 29 * --- | 1-3 | |
| Y | US 3 507 702 A (SANDERSON ROBERT A) 21 April 1970 (1970-04-21) * figure 1 * * column 2, line 57 - column 3, line 9 * * column 3, line 38-43 * * column 4, line 64 - column 5, line 26 * --- | 1-3 | |
| Y | EP 1 158 652 A (MATSUSHITA ELECTRIC IND CO LTD) 28 November 2001 (2001-11-28) * abstract * * paragraph [0004] - paragraph [0005] * * paragraph [0044] - paragraph [0046] * * claims 1-4,9-12 * --- | 1-3 | TECHNICAL FIELDS SEARCHED (Int.Cl.7) H01M H02K B60K H02P |
| Y | US 6 252 331 B1 (WESTERGREN DONALD M ET AL) 26 June 2001 (2001-06-26) * column 14, line 25-54 * * column 12, line 65 - column 13, line 17 * ----- | 1-3 | |

The present search report has been drawn up for all claims

| Place of search | Date of completion of the search | Examiner |
|---|---|---|
| MUNICH | 11 June 2004 | Haering, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**

EP 03 25 0456

This annex lists the patent family members relating to the patent documents cited in the above-mentioned European search report.
The members are as contained in the European Patent Office EDP file on
The European Patent Office is in no way liable for these particulars which are merely given for the purpose of information.

11-06-2004

| Patent document cited in search report | | Publication date | Patent family member(s) | | Publication date |
|---|---|---|---|---|---|
| WO 0063994 | A | 26-10-2000 | US | 6207308 B1 | 27-03-2001 |
| | | | AU | 4343400 A | 02-11-2000 |
| | | | DE | 10084496 T0 | 27-06-2002 |
| | | | JP | 2002542592 T | 10-12-2002 |
| | | | WO | 0063994 A1 | 26-10-2000 |
| US 6326763 | B1 | 04-12-2001 | NONE | | |
| US 3507702 | A | 21-04-1970 | CH | 492311 A | 15-06-1970 |
| | | | DE | 1671963 A1 | 09-03-1972 |
| | | | FR | 1583419 A | 31-10-1969 |
| | | | GB | 1200022 A | 29-07-1970 |
| | | | SE | 354945 B | 26-03-1973 |
| EP 1158652 | A | 28-11-2001 | JP | 2001339804 A | 07-12-2001 |
| | | | JP | 2001339923 A | 07-12-2001 |
| | | | CN | 1325172 A | 05-12-2001 |
| | | | EP | 1158652 A2 | 28-11-2001 |
| | | | US | 2002047429 A1 | 25-04-2002 |
| US 6252331 | B1 | 26-06-2001 | AU | 9229898 A | 05-04-1999 |
| | | | WO | 9914847 A1 | 25-03-1999 |

EPO FORM P0459